(19) Europäisches Patentamt European Patent Office Office européen des brevets

(11) EP 4 575 894 A1

(12) EUROPEAN PATENT APPLICATION

(43) Date of publication:
25.06.2025 Bulletin 2025/26

(51) International Patent Classification (IPC):
*G06N 3/045* (2023.01)

(21) Application number: 24218098.2

(22) Date of filing: 06.12.2024

(52) Cooperative Patent Classification (CPC):
G06N 3/045; G06N 3/044; G06N 3/08

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.12.2023 IN 202321087106

(71) Applicant: Tata Consultancy Services Limited
Maharashtra (IN)

(72) Inventors:
• SIVAKUMAR, Narendran
London, SW1X 7HS (GB)
• VISWANATHAN, Sankaranarayanan
600113 Chennai, Tamil Nadu (IN)
• KANNAN, Radhika
600113 Chennai, Tamil Nadu (IN)
• RAMASAMY VENKADA, Subramanian
560066 Bangalore, Karnataka (IN)

(74) Representative: Goddar, Heinz J. et al
Boehmert & Boehmert
Anwaltspartnerschaft mbB
Pettenkoferstrasse 22
80336 München (DE)

(54) **SELECTION-OPTIMIZATION-FINE-TUNING OF AI MODELS FOR NUANCED TASK BY ANALYZING THE NUANCED TASK USING LRI-DECNN**

(57) Currently task automation is in its initial stage. Understanding task complexity/requirements, effectiveness/efficiency of automation using best models to automate the task and performance of such task automation approaches are being explored. A method and system for selection-optimization-fine-tuning of Artificial Intelligence (AI) models for nuanced task by analyzing the nuanced task using Logic and Rule Integrated Decoder Neural Network (LRI-DecNN) is disclosed. The system performs tasks analysis using the LRI-DecNN, AI augmentation suitability check and constructs agent chain of subtasks using meta-mixture technique tailored to specific enterprise needs. Thereafter, the most appropriate generative AI model is selected and fine-tuned for the task at hand using Blackbox estimation. The task is executed and monitored for optimal performance.

FIG. 1B

**Description**

CROSS-REFERENCE TO RELATED APPLICATIONS AND PRIORITY

The present application claims priority to Indian application no. Indian Patent Application No. 202321087106, filed on December 20, 2023.

TECHNICAL FIELD

The embodiments herein generally relate to the field of Artificial Intelligence (AI) model development and, more particularly, to a method and system for selection-optimization-fine-tuning of Artificial Intelligence (AI) models for nuanced task by analyzing the nuanced task using Logic and Rule Integrated Decoder Neural Network (LRI-DecNN)

BACKGROUND

Leveraging Generative Artificial Intelligence (GenAI) to automate complex, nuanced tasks within enterprises is an open area of research. These tasks, often similar but not identical, require a degree of understanding and adaptability that surpasses traditional automation tools. Nuanced tasks can be defined as tasks that are complex, ambiguous, heterogenous, and the ones that require highly skilled human beings to understand and execute successfully. The current landscape of automating complex, highly skilled tasks using Generative AI presents several significant challenges for enterprises such as ensuring data quality, model training complexities, balancing creativity with accuracy, or integrating the model into existing workflows. Mere focus on task automation using AI, or GenAI may not be always the right approach for effective automation with AI augmentation. The effort that has gone into automation should be outperformed by results or effectiveness of the automation. Thus understanding the task complexity, the task in entirety and as a sequence of subtasks plays a major role in task automation effectiveness. The right AI model selection according to the task is another major factor.

Some recent works have proposed task automation, wherein they attempt to determine a task automation score by analyzing the task using Natural Language Processing and later decide on effectiveness of task automation based on the score. However, once identified for task automation the task is classified into predefined automation categories for further AI based automation. The automation category for AI usage here provides a static approach for automation. Furthermore, as mentioned tasks for automation may be better executed in segments, and if generalized under one automation approach may not provide effective automation solution. Furthermore, continual learning incorporating human feedback is a key to enhance efficiency and effectiveness of automation processes.

Thus, task analysis of nuanced task is challenging an open area of research. Furthermore execution of the analyzed task with AI augmentation, specifically GenAI augmentation, to bring in effective, efficient automation is critical and needs to be explored.

SUMMARY

Embodiments of the present disclosure present technological improvements as solutions to one or more of the above-mentioned technical problems recognized by the inventors in conventional systems.

For example, in one embodiment, a method for selection-optimization-fine-tuning of Artificial Intelligence (AI) models for performing a task is provided. The method includes analyzing, by using a Logic and Rule Integrated-Decoder Neural Network (LRI-DecNN), a task received in natural language to obtain a contextual output for the task comprising a complexity (C), a clarity of objectives (O) and an augmentation potential (A) of the task. A self-attention mechanism of the LRI-DecNN is modified to integrate a logic and rule factor (B) enabling the LRI-DecNN to pay attention to a set of predefined logic and rules.

Further, the method includes assessing by the LRI-DecNN executed, suitability of the task for Artificial Intelligence (AI) augmentation based on value of a score function (S) derived from the complexity (C), the clarity of objectives (O) and the augmentation potential (A). Further, the method includes translating the task into an agent chain comprising a set of chained subtasks using a meta-mixture of experts technique, wherein the meta-mixture of experts technique utilizes a routing function (R) that evaluates requirements of the task and matches the requirements with the strengths and specializations of each expert model amongst the set of expert models of the meta-mixture of experts technique. Furthermore, the method includes determining an AI model among a set of AI models for each subtask among the set of chained subtasks based on a statistical function for Blackbox estimation in AI augmentation. Further, the method includes fine-tuning each AI model identified for each subtask among the set of chained subtasks using a KL divergence to align output distribution of each AI model with an expected distribution of the task, wherein fine-tuning involves adjusting training data, modifying the AI model architecture, or tweaking the learning process of the AI model to minimize the KL divergence.

Furthermore, the method includes determining an effective optimization technique for each AI model in accordance with the subtask using a Q-learning model to optimize each AI model. Further, the method includes tuning a set of hyperparameters of each AI model among the set of AI models. An Actor-Critic framework is integrated to refine Q-values, in real time, obtained from previous reinforcement learning steps of the Q-learning, and wherein an actor proposes actions based on a current policy, while a critic evaluates the actions by estimating a value function, leading to more precise Q-value adjustments. During inferencing, the hyperparameter tuned set of AI models identified for each subtask combinedly perform the task for an enterprise, and wherein the task is a nuanced task.

In another aspect, a system for selection-optimization-fine-tuning of Artificial Intelligence (AI) models for performing a task is provided. The system comprises a memory storing instructions; one or more Input/Output (I/O) interfaces; and one or more hardware processors coupled to the memory via the one or more I/O interfaces, wherein the one or more hardware processors are configured by the instructions to analyze, by using a Logic and Rule Integrated-Decoder Neural Network (LRI-DecNN), a task received in natural language to obtain a contextual output for the task comprising a complexity (C), a clarity of objectives (O) and an augmentation potential (A) of the task. A self-attention mechanism of the LRI-DecNN is modified to integrate a logic and rule factor (B) enabling the LRI-DecNN to pay attention to a set of predefined logic and rules.

Further, the one or more hardware processors are configured to assess by the LRI-DecNN executed, suitability of the task for Artificial Intelligence (AI) augmentation based on value of a score function (S) derived from the complexity (C), the clarity of objectives (O) and the augmentation potential (A). Further, the one or more hardware processors are configured to translate the task into an agent chain comprising a set of chained subtasks using a meta-mixture of experts technique, wherein the meta-mixture of experts technique utilizes a routing function (R) that evaluates requirements of the task and matches the requirements with the strengths and specializations of each expert model amongst the set of expert models of the meta-mixture of experts technique. Furthermore, the one or more hardware processors are configured to determine an AI model among a set of AI models for each subtask among the set of chained subtasks based on a statistical function for Blackbox estimation in AI augmentation. Further, the one or more hardware processors are configured to fine-tune each AI model identified for each subtask among the set of chained subtasks using a KL divergence to align output distribution of each AI model with an expected distribution of the task, wherein fine-tuning involves adjusting training data, modifying the AI model architecture, or tweaking the learning process of the AI model to minimize the KL divergence.

Furthermore, Further, the one or more hardware processors are configured to determine an effective optimization technique for each AI model in accordance with the subtask using a Q-learning model to optimize each AI model. Further, Further, the one or more hardware processors are configured to tune a set of hyperparameters of each AI model among the set of AI models. An Actor-Critic framework is integrated to refine Q-values, in real time, obtained from previous reinforcement learning steps of the Q-learning, and wherein an actor proposes actions based on a current policy, while a critic evaluates the actions by estimating a value function, leading to more precise Q-value adjustments. During inferencing, the hyperparameter tuned set of AI models identified for each subtask combinedly perform the task for an enterprise, and wherein the task is a nuanced task.

In yet another aspect, there are provided one or more non-transitory machine-readable information storage mediums comprising one or more instructions, which when executed by one or more hardware processors causes a method for selection-optimization-fine-tuning of Artificial Intelligence (AI) models for performing a task.

The method includes analyzing, by using a Logic and Rule Integrated-Decoder Neural Network (LRI-DecNN), a task received in natural language to obtain a contextual output for the task comprising a complexity (C), a clarity of objectives (O) and an augmentation potential (A) of the task. A self-attention mechanism of the LRI-DecNN is modified to integrate a logic and rule factor (B) enabling the LRI-DecNN to pay attention to a set of predefined logic and rules.

Further, the method includes assessing by the LRI-DecNN executed, suitability of the task for Artificial Intelligence (AI) augmentation based on value of a score function (S) derived from the complexity (C), the clarity of objectives (O) and the augmentation potential (A). Further, the method includes translating the task into an agent chain comprising a set of chained subtasks using a meta-mixture of experts technique, wherein the meta-mixture of experts technique utilizes a routing function (R) that evaluates requirements of the task and matches the requirements with the strengths and specializations of each expert model amongst the set of expert models of the meta-mixture of experts technique. Furthermore, the method includes determining an AI model among a set of AI models for each subtask among the set of chained subtasks based on a statistical function for Blackbox estimation in AI augmentation. Further, the method includes fine-tuning each AI model identified for each subtask among the set of chained subtasks using a KL divergence to align output distribution of each AI model with an expected distribution of the task, wherein fine-tuning involves adjusting training data, modifying the AI model architecture, or tweaking the learning process of the AI model to minimize the KL divergence.

Furthermore, the method includes determining an effective optimization technique for each AI model in accordance with the subtask using a Q-learning model to optimize each AI model. Further, the method includes tuning a set of hyperparameters of each AI model among the set of AI models. An Actor-Critic framework is integrated to refine Q-values, in real time, obtained from previous reinforcement learning steps of the Q-learning, and wherein an actor proposes actions based on a current policy, while a critic evaluates the actions by estimating a value function, leading to more precise Q-value adjustments. During inferencing, the hyperparameter tuned set of AI models identified for each subtask combinedly perform the task for an enterprise, and wherein the task is a nuanced task.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for selection-optimization-fine-tuning of Artificial Intelligence (AI) models for nuanced task by analyzing the nuanced task using Logic and Rule Integrated Decoder Neural Network (LRI-DecNN), in accordance with some embodiments of the present disclosure.
FIG. 1B illustrates an architectural overview of the system of FIG. 1A, in accordance with some embodiments of the present disclosure.
FIGS. 2A through 2B (collectively referred as FIG. 2) is a flow diagram illustrating a method for selection-optimization-fine-tuning of Artificial Intelligence (AI) models for nuanced task by analyzing the nuanced task using the LRI-DecNN of the system depicted in FIG. 1A and 1B, in accordance with some embodiments of the present disclosure.
FIG. 3 depicts an architecture of the LRI-DecNN, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Nuanced enterprise tasks can be defined as tasks that are complex, ambiguous, heterogenous, and the ones that require highly skilled human beings to understand and execute successfully. The current landscape of automating complex, highly skilled tasks using Generative Artificial Intelligence (AI) presents several significant challenges for enterprises as mentioned below:

1. Limited applicability of Robotic Process Automation and prevalent AI/Machine Learning (ML) techniques for automating nuanced tasks: While Robotic Process Automation (RPA) is effective for structured, rule-based tasks, it, along with other conventional AI/ML-based automation techniques, falls short in automating complex, nuanced tasks. RPA lacks cognitive capabilities and struggles with unstructured data, limiting its use to tasks that are routine and predictable. Similarly, traditional AI/ML methods, while more advanced than RPA in handling data variability and complexity, often face challenges in understanding context deeply, making nuanced decisions, and adapting to rapidly changing scenarios without extensive retraining. These methods are typically designed for specific problem types and require substantial data preprocessing and feature engineering, making them less agile in dealing with heterogeneous and ambiguous tasks. Furthermore, both RPA and conventional AI/ML approaches lack the ability to effectively capture and apply tacit knowledge, a key aspect in automating complex tasks that rely on human expertise and judgment. This highlights the need for more sophisticated, context-aware, and adaptable AI solutions capable of handling the variability, ambiguity, and complexity inherent in highly skilled tasks.
2. Manual and isolated development processes: Most Generative AI development activities are manual and isolated, leading to slow and inefficient workflows. This isolation impedes the sharing of best practices and innovations, which are crucial for advancing AI capabilities.
3. Expertise-Dependent workflow identification: The process of identifying the best practices and workflows for Generative AI implementation is heavily reliant on deep expertise. This requirement for high-level exposure and experience creates a barrier to entry and limits the ability of businesses to effectively leverage these technologies.

4. Complex personalized augmentation of employees, products, and services: Augmenting employees, products, and services with GenAI capabilities such as In-Context Fine-Tuning (IFT), Supervised Fine-Tuning (SFT), and Reinforcement Learning from Human Feedback (RLHF) requires a high degree of expertise and finesse. This complexity makes it challenging for organizations to effectively personalize and enhance their offerings and workforce capabilities using AI.

5. High iterative nature of development: Generative AI developments are typically highly iterative, requiring continuous adjustments and refinements. This iterative process can be time-consuming and resource-intensive, thus slowing down the pace of innovation and implementation.

6. Integration challenges: The vast number of choices available for each development activity lead to integration problems. Enterprises often struggle to seamlessly integrate various components and choices into a cohesive and functioning system.

7. Lack of widespread adoption of control-based guardrails: There is currently no widespread adoption of control-based guardrails at scale. This lack of standardization and control mechanisms can lead to issues with data privacy, security, and compliance, especially in highly regulated industries.

8. Experimental nature of Agent-Based Modeling: While Agent-Based Modeling (ABM) presents significant potential for business applications, its current experimental status and limited adoption in the business world restrict its practical utility. Enterprises are hesitant to adopt these models due to uncertainties regarding their efficacy and business relevance.

Embodiments of the present disclosure provide a method and system for selection-optimization-fine-tuning of Artificial Intelligence (AI) models for nuanced task by analyzing the nuanced task using Logic and Rule Integrated Decoder Neural Network (LRI-DecNN). The system and method alleviate the issues of knowledge concentration in enterprises by automating tasks characterized by high variability. It employs advanced generative AI algorithms to interpret, manage, and execute a range of tasks that traditionally demanded human discretion due to their inherent variability and complexity.

The system receives a natural language task and performs task analysis using the LRI-DecNN or the Decoder-only Transformer (GenAI) model, which has an architecture that integrates Business requirements of an enterprise into the task analysis by the LRI-DecNN. Further, suitability of the analyzed task for AI augmentation, the task is analyzed using a score function based on its characteristics and requirements of the task. Accordingly, the system automatically constructs an agent chain using a meta-mixture technique, where each agent is responsible for a specific part of the task (subtask), such as data gathering, analysis, or decision-making. The system then selects the most appropriate generative AI model from its repository, considering factors like task complexity, data type, and desired outcome. It fine-tunes the model using advanced techniques to ensure optimal performance. Actor-Critic framework is integrated to refine Q-values, in real time, obtained from previous reinforcement learning steps of Q-learning applied during model optimization, wherein an actor proposes actions based on the current policy, while a critic evaluates the actions by estimating a value function, leading to more precise Q-value adjustments.

Once set up, the agent chain executes the task, with each agent performing its designated function. The system continuously monitors performance, making real-time adjustments to the agent chain and model parameters for maximum efficiency and accuracy.

The AI models identified for each subtask can be Generative AI models such as Generative Adversarial Networks (GANs) that can create visual and multimedia artifacts from both imagery and textual input data, Transformer-based models such as Generative Pre-Trained (GPT) language models that can use information gathered and create textual content, and the like.

Listed below are example tasks that are effectively and efficiently augmented with AI or GenAI via the system.

1. **Automated Customer Support:** Handling diverse customer queries, complaints, and requests that vary widely in context and complexity. The system can adaptively select the best GenAI models for understanding and responding to specific customer needs and sentiments.

2. **Content Generation and Personalization:** Creating personalized content for marketing, such as targeted emails or social media posts. The system can generate creative, contextually relevant content that resonates with different audience segments.

3. **Legal Document Analysis:** Analyzing legal documents to extract relevant information, identify clauses, and summarize content. The system can adapt to the specific legal language and context, providing accurate and comprehensive analysis.

4. **Medical Data Interpretation:** Interpreting patient records, clinical notes, and research papers to extract critical medical information. This requires a deep understanding of medical terminologies and the ability to handle diverse data formats.

5. **Language Translation and Localization:** Translating and localizing content for different regions, considering cultural nuances and idiomatic expressions. The system can dynamically select models that are specialized in specific languages and cultural contexts.

**6. Sentiment Analysis and Social Media Monitoring:** Analyzing social media posts, reviews, and feedback to gauge public sentiment on various topics or brands. The system can continuously adapt to evolving internet slang, emojis, and contextual cues.

**7. Automated News Generation and Summarization:** Generating news articles or summaries from structured data, such as financial reports or sports statistics. The system can ensure the generated content is accurate, coherent, and stylistically appropriate.

**8. Interactive Educational Content Creation:** Creating adaptive, personalized educational content that responds to a learner's style and pace. The system can generate questions, explanations, and interactive content based on the learner's performance.

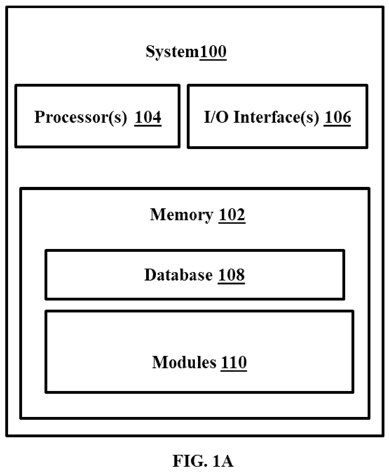

Referring now to the drawings, and more particularly to FIGS. 1A through 3, where similar reference characters denote corresponding features consistently throughout the figures, there are shown preferred embodiments, and these embodiments are described in the context of the following exemplary system and/or method.

FIG. 1A is a functional block diagram of a system 100, for selection-optimization-fine-tuning of Artificial Intelligence (AI) models for nuanced task by analyzing the nuanced task using Logic and Rule Integrated Decoder Neural Network (LRI-DecNN), in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface for interactive exchange and human feedback to automatically continually fine tune the AL models and re-selection of AI models for subtasks. The user interface also enables receiving the natural language task for which the AI models have to be selected and fine-tuned. The I/O interface 106 can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

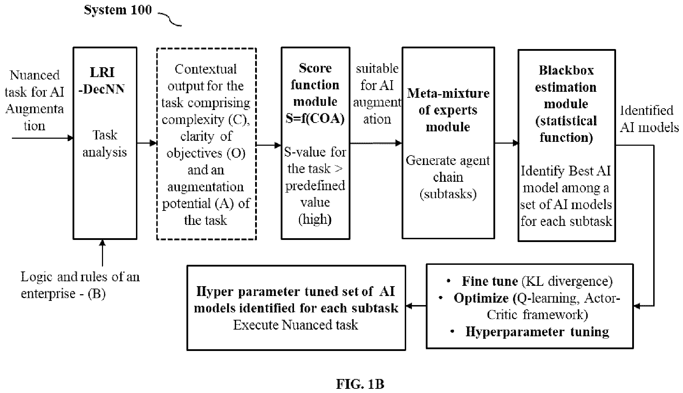

In an embodiment, the memory 102 includes a plurality of modules 110 such as the LRI-DecNN, the scoring module implementing a scoring function, the meta-mixture of experts module implementing a meta-mixture of experts technique, Blackbox estimation module, and the like as depicted in system architectural overview of FIG. 1B.

The plurality of modules 110 include programs or coded instructions that supplement applications or functions performed by the system 100 for executing different steps involved in the process of selection-optimization-fine-tuning of Artificial Intelligence (AI) models for nuanced task by analyzing the nuanced task using Logic and Rule Integrated Decoder Neural Network (LRI-DecNN), being performed by the system 100. The plurality of modules 110, amongst other things, can include routines, programs, objects, components, and data structures, which perform particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system 100 and methods of the present disclosure.

Further, the memory 102 includes a database 108. The database (or repository) 108 may include a plurality of abstracted pieces of code for refinement and data that is processed, received, or generated as a result of the execution of the plurality of modules in the module(s) 110. Further, the database can have a repository of AI/ GENAI models, from which the system can select the most appropriate model for a specific subtask.

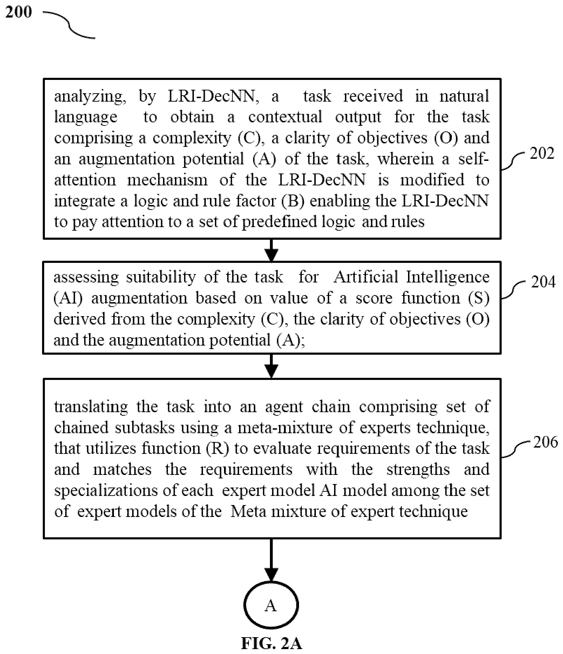

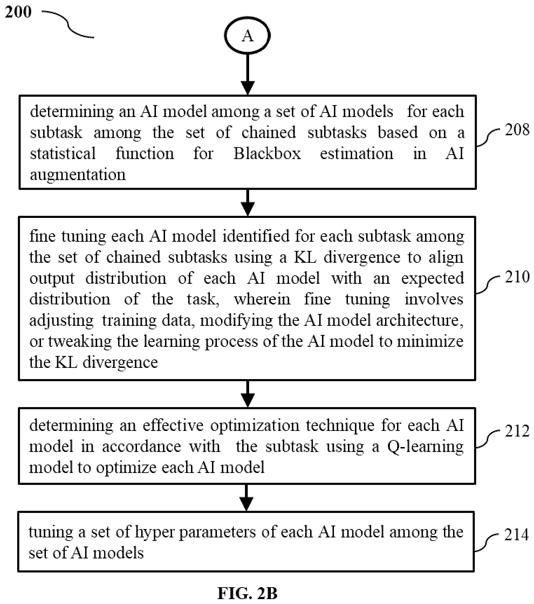

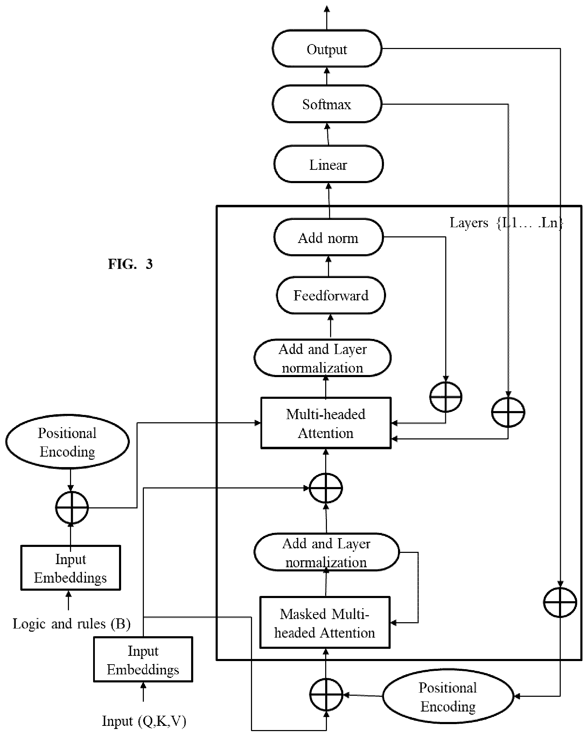

Although the database 108 is shown internal to the system 100, it will be noted that, in alternate embodiments, the database 108 can also be implemented external to the system 100, and communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to architectural overview of the system as in FIG. 1B, steps in flow diagram of FIG. 2, and LRI-DecNN architecture of FIG. 3.

FIG. 1B illustrates an architectural overview of the system 100 of FIG. 1A, in accordance with some embodiments of the present disclosure and can be understood in conjunction with method steps explained in FIG. 2.

FIGS. 2A through 2B (collectively referred as FIG. 2) is a flow diagram illustrating a method 200 for selection-optimization-fine-tuning of Artificial Intelligence (AI) models for nuanced task by analyzing the nuanced task using Logic and Rule Integrated Decoder Neural Network (LRI-DecNN) of the system depicted in FIG. 1A and 1B, in accordance with some embodiments of the present disclosure.

FIG. 3 depicts architecture of the LRI-DecNN, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to the steps of the method 200, at step 202 of the method 200, the one or more hardware processors 104 are configured by the instructions to analyze, by the LRI-DecNN, a task received in natural language to obtain a contextual output for the task comprising a complexity (C), a clarity of objectives (O) and an augmentation potential (A) of the task. A self-attention mechanism of the LRI-DecNN is modified to integrate a logic and rule factor (B) enabling the LRI-DecNN to pay attention to a set of predefined logic and rules. The task is received through the UI (I/O interface 106) or an Application Programming Interface (API). This could be a complex business problem, or a process automation requirement provided in natural language. The received natural language input is parsed, with understanding of structured and unstructured data, with help of robust data ingestion and preprocessing capabilities, known in the art. The task analysis is performed by the LRI-DecNN.

The LRI-DecNN model is distinct from traditional Decoder Transformer models, which typically use a combination of encoder and decoder components. The decoder-only architecture is specifically designed to generate outputs based on a given context, making it highly effective for tasks that require a deep understanding of language and the generation of human-like responses. As depicted in the architecture of the decoder disclosed (LRI-DecNN) in FIG. 3, the LRI-DecNN model is adept at interpreting the intricacies of language used in the task description. It excels in grasping the subtleties and nuances of the task, comprehending its underlying objectives, and discerning the specific requirements. This is achieved through a sophisticated understanding of context, where the LRI-DecNN analyzes the input text and generates insights and interpretations that align with the intended goals of the task.

The LRI-DecNN operates by processing the input sequence (the task description) and generating a contextually relevant output. It does this by predicting the next word or sequence of words based on the input it has received. Unlike encoder-decoder models, which first encode an input sequence into a fixed representation and then decode it into an output, the decoder-only model continuously refines its understanding of the input as it generates the output. This allows for a more dynamic and nuanced interpretation of the task. The model leverages advanced techniques such as attention mechanisms, which enable it to focus on different parts of the input text and understand how these parts relate to each other. This results in a more coherent and contextually accurate understanding of the task.

Integration of Business Logic and Rules: The LRI-DecNN decoder-only model is enhanced by integrating business logic and rules as an additional input to the attention mechanism. This integration allows the model to align its outputs with specific business practices and regulatory requirements, providing a more nuanced understanding of complex enterprise tasks.

**Revised Mathematical Notation for the attention mechanism** of the **LRI-DecNN:** As depicted in FIG. 3, the Q, K, and V represent the standard queries, keys, and values, respectively, used in the attention mechanism. B represents the encoded logic and rules, such as for example enterprise business logic and rules. This encoding is integrated into the attention calculation, influencing how the model weighs different parts of the input. $'d_k'$ is the dimension of the keys, which normalizes the scaling factor in the SoftMax calculation. The addition of B in the attention calculation allows the model to consider business-specific constraints and guidelines while processing the input. This results in a more contextually rich and compliant understanding of the task. The integration of encoded business logic and rules into the attention mechanism of the system's decoder-only model represents a significant advancement in AI-driven task understanding for enterprise applications. By incorporating these business-specific elements directly into the LRI-DecNN's core computational process, the system 100 achieves a level of task comprehension that is both deeply aligned with industry-specific requirements and sensitive to the complexities of enterprise operations. This technical enhancement, as represented by the revised mathematical notation, demonstrates a sophisticated approach to embedding business intelligence into AI models. The system provides effective AI augmentation that is beyond the capabilities of standard language models, offering a tailored, industry-specific solution for complex task analysis. This advancement is a significant leap in the field of AI-driven enterprise solutions.

As mentioned earlier, it is critical to analyze whether the effort, cost, time etc. that goes into automation with AI augmentation, is worth the returns. Thus, at step 204 of the method 200, the one or more hardware processors 104 are configured by the instructions to assess suitability of the task for Artificial Intelligence (AI) augmentation based on value of a score function (S) derived from the complexity (C), the clarity of objectives (O) and the augmentation potential (A).

Understanding of task analysis performed by the system 100 for a Nuance task example: Automation of Quality Control in a Manufacturing Plant:

1. Complexity (C):

- Definition: This refers to the level of difficulty or intricacy involved in the task.
- Manufacturing Example: The complexity might involve detecting defects in manufactured products using sophisticated imaging techniques. The task's complexity arises from the need to accurately identify a wide range of potential defects, from minor surface blemishes to critical structural flaws, across different product types.

2. Clarity of Objectives (O):

- Definition: This pertains to how well-defined and clear the goals or expected outcomes of the task are.
- Manufacturing example: The objective is clearly defined: to identify and categorize defects in products to ensure they meet quality standards. The clarity lies in having specific criteria for what constitutes a defect and clear categorization of defect types.

3. Augmentation Potential (A):

- Definition: This represents the task's capacity to be enhanced or augmented using AI/GenAI technologies.
- Manufacturing example: There is high augmentation potential in automating defect detection using AI, as it can process images more quickly and consistently than human inspectors and can also learn to recognize complex patterns of defects.

4. Logic and Rule Factor (B):

- Definition: This factor integrates specific predefined logic and rules into the AI model's decision-making process.
- Manufacturing example: The logic and rule factor could include the specific criteria used to identify different types of defects (e.g., size, shape, location) and the rules for categorizing them (e.g., critical vs. non-critical defects). It ensures the AI model adheres to established quality control standards and practices.

In this scenario, the LRI-DecNN with the self-attention mechanism integrating (B) would be tailored to analyze images of manufactured products, paying attention to predefined criteria and rules of the enterprise for quality assessment. The integration of these elements - Complexity (C), Clarity of Objectives (O), Augmentation Potential (A), and Logic and Rule Factor (B) - ensures a comprehensive and effective approach to automating the quality control process in a manufacturing setting.

**Task Suitability Assessment:** The step 204 above involves evaluating the complexity, clarity of objectives, and the feasibility of automating the task. The assessment leverages the LRI-DEC NN's analysis, using Natural Language Processing (NLP) techniques to gauge the task's intricacies and alignment with AI capabilities. In the context of personalized augmentation, the task suitability assessment determines whether a task is appropriate for augmentation with GenAI, specifically focusing on enhancing human capabilities rather than full automation. This involves evaluating the task's complexity, the clarity of its objectives, and the potential for GenAI to augment human performance. The assessment leverages the decoder-only model's analysis, using advanced NLP techniques to gauge the task's intricacies and its alignment with GenAI capabilities for augmentation. The decoder-only model examines factors such as the level of human expertise required, the potential for GenAI to provide meaningful support, and the integration of GenAI into human workflows.

The score function (S) evaluates various aspects of the task in terms of augmentation potential. For instance, it can assign scores based on the potential for GenAI to enhance human decision-making, the complexity of the task that can be simplified by GenAI, and the integration of GenAI insights into human-driven processes. The scoring function can be represented as S = f(C, O, A) as mentioned above. Each of these factors is evaluated and scored, with the total score (S) determining the task's suitability for augmentation with AI or GenAI models.

**Example of Task that can be ideal candidate for Personalized Augmentation with GenAI:** A task like high-level strategic decision-making, such as developing a new business strategy based on emerging market trends, might score high in augmentation potential due to the complexity and the value GenAI can add in providing data-driven insights and scenario analysis.

**Example of Task that may not be suitable candidate for Personalized Augmentation with GenAI:** A rule-based task such as data entry, which is straightforward and does not benefit significantly from GenAI augmentation, would likely score low in augmentation potential.

The range for high and low values of S, the augmentation suitability score in the context of assessing a natural language task for AI or GenAI augmentation, typically depends on how the scoring function is calibrated. However, without specific calibration details, a general approach can be considered:

1. S Range Definition: The range of S is often defined between 0 and 1, where 0 represents the lowest suitability for augmentation and 1 represents the highest suitability.

2. Interpretation of S Values: High Suitability: A high value of S, closer to 1, indicates that the task is highly suitable for augmentation with a GenAI model. This might be in scenarios where the task is complex (high C), has clear objectives (high O), and shows significant potential for augmentation (high A). Low Suitability: A low value of S, closer to 0, suggests that the task is not suitable for GenAI augmentation. This could be due to low complexity (low C), unclear objectives (low O), or limited potential for augmentation (low A).

3. Thresholds for High and Low Suitability: The specific thresholds for what constitutes 'high' and 'low' values of S can vary based on the application and the sensitivity of the model. Commonly, a threshold above 0.7 or 0.8 might be considered high suitability, while a threshold below 0.3 or 0.2 might be considered low suitability.

The meta-learner, a sophisticated component of the system 100, is responsible for learning and adjusting the weights applied to complexity (C), clarity of objectives (O), and augmentation potential (A) in the scoring formula. This learning process is conducted through the analysis of a wide range of tasks and their outcomes post-GenAI augmentation, allowing the meta-learner to discern patterns and relationships between task characteristics and successful augmentation.

At step 206 of the method 200, the one or more hardware processors 104 are configured by the instructions to translate the task into an agent chain comprising set of chained subtasks using a meta-mixture of experts technique. The meta-mixture of experts technique utilizes a routing function (R) that evaluates requirements of the task and matches the requirements with the strengths and specializations of each expert model AI model among the set of expert models of the meta-mixture of experts technique.

**Task translation into agent chain (chained or linked subtasks) using meta-mixture of experts Technique:** As mentioned above, this technique involves expert choice and routing among various task-centric LLMs to create optimized agent chain for the specific task. It is a modified form of ensemble learning where instead of multiple neuron groupings within a large neural network, multiple LLMs (experts) as a whole are used as experts, and decisions on which expert to use at what time are based on the task requirements. This ensures a more robust and flexible approach to task execution. The assessed tasks are translated into a series of agent chain using the meta-mixture of experts technique, specifically for the purpose of augmenting human capabilities with GenAI. This technique leverages the expertise of multiple task-centric LLMs to support and enhance human tasks with GenAI. It represents a modified form of ensemble learning tailored for augmentation with GenAI. Instead of using multiple neuron groupings within a single large neural network, the system 100 employs multiple LLMs (experts) in their entirety. Decisions on which expert to use and at what time are based on the specific requirements of the task and how best GenAI can augment human performance. The meta-mixture of experts Technique involves dynamically routing tasks to the most suitable LLMs based on their expertise in augmenting human tasks with GenAI. This is achieved through a routing algorithm that evaluates the task requirements and matches them with the strengths and specializations of available LLMs in terms of augmentation with GenAI.

The choice routing algorithm can be represented as be a routing function ®, mathematically expressed as : $(R(T, E_i \text{ where } i = 1 \text{ to } n))$ , where (T) is the task, and (E) is the set of available experts {1...to n} (decoder only Large Language Models (LLMs)) for augmentation with GenAI. The function (R) evaluates the suitability of each expert for augmenting the task with GenAI and routes the task accordingly. The meta-mixture of experts technique for augmentation with GenAI thus uses multiple decoder only LLMs are used as distinct experts, each contributing their specialized knowledge to augment human tasks with GenAI. This approach not only enhances the flexibility and effectiveness of human task execution but also demonstrates a unique and non-obvious solution to the challenge of augmenting complex, nuanced tasks in an enterprise setting with GenAI.

The combination of task sustainability assessment using the score function (S) and the meta-mixture of experts technique applied for task disintegration into meaningful subtasks provides a deep integration of GenAI technology with human workflows, setting a new standard in the augmentation of skilled tasks with GenAI and representing a clear leap over existing solutions in the market.

Upon obtaining agent chain for the task at step 206, at step 208 of the method 200, the one or more hardware processors 104 are configured by the instructions to determine an AI model among a set of AI models (available in the repository or database 108) for each subtask among the set of chained subtasks based on a statistical function for Blackbox estimation in AI augmentation.

**Best AI Model Recommendation in accordance with the subtask:** Model analysis with Blackbox estimation: Blackbox performance estimation is a technique where the internal workings of the model are not necessarily understood in detail, but the output performance is analyzed. This method is used to estimate how different AL models or GenAI models might perform on the given task. It involves statistical analysis, predictive modeling, and sometimes machine learning algorithms to forecast model performance without delving into the model's internal mechanisms. Based on the Blackbox analysis, the system 100 selects the most suitable AI models (includes Gen AI models). This decision is crucial as it determines the effectiveness and efficiency of the task automation. The selection process may involve matching the task's requirements with the models' known capabilities, analyzing historical performance data, and considering the computational efficiency of each model. The system 100 collects data on various GenAI models' past performances, including metrics like accuracy, efficiency, and context relevance. This data forms the basis of the Blackbox estimation. Machine learning algorithms, particularly those adept at pattern recognition and prediction, analyze this data to forecast the performance of each GenAI model on the new task. The algorithms might use features like task complexity, required expertise level, and historical success rates of models in similar tasks. The system 100 then generates a performance score or probability estimate for each GenAI model, indicating its suitability for the task at hand.

Role of GenAI: In the system 100, the GenAI is not limited to task suitability assessment but plays a pivotal role in the entire process of task analysis, model selection, and execution. GenAI models are central to the system's capability to handle complex, nuanced tasks that traditional AI or ML models might struggle with. The importance of GenAI lies in its ability to generate, understand, and process human-like language and concepts, making it ideal for tasks that require a high degree of cognitive understanding and creativity. This is in contrast to typical ML models, which might be more suited for tasks with clear-cut patterns and predictable outcomes.

Creating a statistical function for Blackbox estimation, that is unique to GenAI task augmentation effectiveness estimation involves designing a model that can predict the performance of a GenAI model on a specific task. This function would need to consider various factors that influence the effectiveness of GenAI in augmenting tasks. Provided below is an example of how such a function might be structured:

### Statistical function for Blackbox estimation in GenAI task augmentation

Function definition: Let a function 'F' be defined that estimates the effectiveness of a GenAI model for a given task. This function takes a set of input parameters and outputs a score representing the predicted effectiveness.

Input Parameters:

1. Task Complexity ($TC$): A measure of the task's difficulty, which could be quantified based on factors like the number of steps involved, the level of abstract reasoning required, etc.
2. Historical Model Performance ($HMP$): Data on how well similar GenAI models have performed on similar tasks in the past.
3. Data Availability ($DA$): The extent and quality of data available for the task, which is crucial for GenAI model training.
4. Model Adaptability ($MA$): A measure of how adaptable the GenAI model is to different types of tasks.
5. Task-Model Alignment ($TMA$): A score representing how well the task aligns with the GenAI model's strengths and capabilities.

Function Structure: The function 'F' can be represented as a weighted sum of these parameters, each with its own coefficient that signifies its importance:

$$F(TC, HMP, DA, MA, TMA)$$

$$= w\_1 * TC + w\_2 * HMP + w\_3 * DA + w\_4 * MA + w\_5$$

$$* TMA$$

where 'w_1', 'w_2', 'w_3'; 'w_4', and 'w_5' are the weights assigned to each parameter.

Example Calculation: Suppose a task with the following parameter values is present:

- *Task Complexity (TC):* 0.7 *(on a scale of* 0 *to* 1)
- *Historical Model Performance (HMP):* 0.8

  - *Data Availability (DA):* 0.6
  - *Model Adaptability (MA):* 0.9
  - *Task - Model Alignment (TMA):* 0.85 - weights:- w_1 = *0.2, w_2* = 0.3, w_3 = 0.15, w_4 = 0.25, w_5 = 0.1

Then the effectiveness score is calculated as:

$$F(0.7, 0.8, 0.6, 0.9, 0.85) = 0.2 * 0.7 + 0.3 * 0.8 + 0.15 * 0.6 + 0.25 * 0.9 + 0.1 * 0.85$$

$$F = 0.14 + 0.24 + 0.09 + 0.225 + 0.085$$

$$F = 0.79$$

Interpretation: A score of 0.79 (out of 1) indicates a high level of predicted effectiveness for the GenAI model on this particular task. The higher the score, the more suitable the GenAI model is deemed for the task. This statistical function represents an approach to estimating the effectiveness of GenAI models in task augmentation. It uniquely combines various critical factors, including task complexity, historical performance data, data availability, model adaptability, and task-model alignment, to provide a comprehensive and predictive score. The use of weighted parameters allows for customization based on the specific requirements and priorities of different tasks and industries. This method offers a quantifiable, data-driven way to assess the suitability of GenAI models for complex tasks, enhancing decision-making processes in enterprise environments.

**RNN-Based algorithm for Learning weights in Blackbox estimation:**

1. Data collection and preprocessing: Historical data is gathered on tasks and GenAI model performances. This data includes sequential inputs (Task Complexity, Historical Model Performance, Data Availability, Model Adaptability, Task-Model Alignment) and the observed effectiveness (target variable). Preprocess Data: Normalize the input parameters and convert them into a format suitable for sequential processing. This might involve creating time steps or sequences of data

2. RNN Model Architecture: Select RNN Type: LSTM (Long Short-Term Memory) based on the complexity and length of the sequences. Define Model Layers: RNN with appropriate input, hidden, and output layers. The hidden layers capture the temporal dependencies in the data.

**Pseudocode 1 for RNN - LSTM**

```
import tensorflow as tf
from tensorflow.keras.models import Sequential
from tensorflow.keras.layers import LSTM, Dense
from sklearn.model_selection import train_test_split
from sklearn.preprocessing import MinMaxScaler
import pandas as pd
# Load and preprocess data
data = pd.read_csv('genai_task_data.csv')
scaler = MinMaxScaler(feature_range=(0, 1))
scaled_data = scaler.fit_transform(data)
# Prepare sequential data
X, y = create_sequences(scaled_data, time_steps=5)
# Split data
X_train, X_test, y_train, y_test = train_test_split(X, y, test_size=0.2,
random_state=42)
# Define RNN model
model = Sequential()
```

```
model.add(LSTM(50, return_sequences=True, input shape=(X_train.shape[1],
X_train.shape[2])))
model.add(LSTM(50))
model.add(Dense(1))
# Compile and train the model
model.compile(optimizer='adam', loss='mean_squared_error')
model.fit(X_train, y_train, epochs=100, batch_size=32, validation_data=(X_test,
y_test))
# Evaluate model
y_pred = model.predict(X_test)
mse = tf.keras.losses.MeanSquaredError()
print("MSE:", mse(y_test, y_pred).numpy())
# Extract weights (simplified for illustration)
weights = model.layers[0].get_weights()[0]
```

3. Model training: Define Loss Function: Use a regression-appropriate loss function, like Mean Squared Error (MSE). Train Model: Fit the RNN to the training data. The RNN will learn the weights (parameters) that minimize the loss function over sequences.

4. Hyperparameter tuning: Experiment with different numbers of hidden units, learning rates, and other hyperparameters to optimize the model's performance.

5. Model evaluation: Evaluate the model's performance on a testing set using metrics - Mean Squared Error.

6. Weight extraction: Extract the learned weights from the RNN. These weights represent the importance and influence of each input parameter over time in predicting the effectiveness of a GenAI model for a task.

7. Model deployment: Deploy the RNN for real-time prediction of GenAI model effectiveness in a sequential context.

8. Continuous learning: Continuously update the RNN with new data to refine the weights and adapt to new patterns.

The use of Blackbox performance estimation by the system 100 for AI model or the GenAI models identified for performing each of the subtasks is a significant advancement in the field of enterprise task automation and augmentation. Unlike traditional approaches that rely heavily on understanding the internal mechanisms of each model, the Blackbox optimization disclosed herein allows for a rapid, efficient, and highly effective estimation of a GenAI model's suitability for complex tasks. The integration of advanced statistical and machine learning techniques for predictive modeling ensures that the system can accurately forecast the performance of GenAI models, even in scenarios where the tasks are highly nuanced and require a sophisticated level of understanding. This approach not only streamlines the model selection process but also ensures that the chosen AL/GenAI model is optimally aligned with the task's specific requirements. The incorporation of GenAI across the system, far beyond mere task assessment, sets the system apart from existing solutions and underscoring its potential to revolutionize how enterprises approach task automation and augmentation with GenAI.

Once best AI/GenAI models are identified in accordance with the subtask at step 206, then at step 210 of the method 200, the one or more hardware processors 104 are configured by the instructions to fine tune each AI model identified for each subtask among the set of chained subtasks using a Kullback-Leibler (KL) divergence to align output distribution of each AI model with an expected distribution of the task. As known in the art KL divergence is measure the difference between two probability distributions over the same variable x, which the system applies in the domain of AI model fine tuning for the task. Fine tuning involves adjusting training data, modifying the AI model architecture, or tweaking the learning process of the AI model to minimize the KL divergence.

**Data and task estimation for fine-tuning:** This sub-step involves analyzing the task and available data to determine the best approach for fine-tuning the AI model. It uses the concept of KL divergence, a statistical measure used in information theory, to estimate the difference between two probability distributions. In this context, it helps in understanding how the model's output distribution deviates from the expected results.

**Fine-Tuning strategy formulation using KL Divergence:** Objective: The goal here is to align the GenAI model's output distribution as closely as possible with the expected distribution for a given task. This alignment is crucial for the model to perform effectively in the specific context of the task.

Process:

a. Define the expected distribution: The expected distribution is derived from the task's requirements and the domain-specific data. It represents the ideal output behavior of the model for the given task. For example, in a text generation task for a legal domain, the expected distribution might heavily weigh legal terminologies and formal language structure.

b. Obtain the current model's output distribution: Run the current GenAI model on a representative dataset to obtain its output distribution. This distribution reflects how the model currently behaves, including its biases and tendencies.

c. Calculate KL Divergence: Use the KL divergence formula to quantify the difference between the two distributions. The formula for KL divergence, $D_{KL}(P\|Q)$, for discrete probability distributions P (expected) and Q (model's output) is given by: $D_{KL}(P\|Q) = \sum_I P(i) log \frac{P(i)}{Q(i)}$ In this formula, $P(i)$ *and* $Q(i)$ are the probabilities of the ith element in distributions *P and Q*, respectively.

d. Interpret the Results: A lower value of KL divergence indicates that the model's output is closely aligned with the expected distribution, while a higher value indicates a significant deviation. This information is critical in determining how much and in what ways the model needs to be fine-tuned.

Inform fine-tuning strategy: Based on the KL divergence results, a strategy for fine-tuning is developed for the model. This might involve adjusting the training data, modifying the model architecture, or tweaking the learning process. The strategy aims to minimize the KL divergence, thereby aligning the model's output more closely with the expected distribution.

Example Scenario: Consider a scenario where a GenAI model is being fine-tuned for financial insights generation. The expected distribution emphasizes accuracy in financial terminology, coherence in economic analysis, and a formal tone. The current model's output, however, shows a tendency towards general news style and lacks depth in financial analysis. By calculating the KL divergence, this misalignment is quantified. The fine-tuning strategy then focuses on incorporating more financial data, adjusting the model to prioritize financial terms, and retraining it to reduce the KL divergence, thereby aligning the model's output with the desired financial news characteristics.

This approach represents a significant advancement in GenAI model fine-tuning, offering a systematic, data-driven method to align models with specific task requirements. The use of KL divergence provides a quantifiable measure of alignment, enabling precise adjustments and improvements in model performance. This method is particularly valuable in domains where accuracy and specificity are critical, and it demonstrates an application of information theory in the realm of GenAI.

**Fine-tuning strategy decision point:** The system 100 then decides on the fine-tuning strategies. This could involve choosing between various approaches like supervised learning, unsupervised learning, or transfer learning based on the task requirements and data characteristics. This decision is informed by the previous KL divergence analysis, ensuring that the fine-tuning strategy aligns the model's outputs closely with the desired outcomes.

**Fine-tuning strategy decision point with focus on autoencoders:** In the context of fine-tuning Generative AI (GenAI) models for tasks with scarce or unavailable labeled data, autoencoders emerge as a powerful unsupervised learning strategy. Autoencoders are neural networks designed to learn efficient representations (encodings) of the input data, typically for the purpose of dimensionality reduction or feature learning.

**Basis for strategy selection:**

- KL Divergence Analysis: The KL divergence analysis provide insights into how the model's current output distribution diverges from the expected output distribution. Autoencoders can be employed to minimize this divergence by learning the intrinsic patterns in the data.
- Task requirements and data characteristics: The nature of the task and the characteristics of the available data guide the implementation of the autoencoder.

**Decision process:**

1. Autoencoder Architecture Design:

- Input layer: Matches the dimensionality of the task-specific data.
- Encoder: Compresses the input into a lower-dimensional latent space.
- Decoder: Reconstructs the input data from the latent space representation.
- Output layer: Matches the dimensionality of the input layer.

2. Training the autoencoder:

- Objective: Minimize the reconstruction loss, which is the difference between the input data and its reconstruction from the latent space.
- Loss function: Typically, mean squared error (MSE) or a variant suited to the specific data characteristics.

**Pseudocode 2 for Autoencoder-based fine-tuning:**

```python
'''python
 # Define Autoencoder Architecture
 class Autoencoder(nn.Module):
 def_init_(self, input size, latent_size):
  super(Autoencoder, self._init_()
  # Encoder
  self.encoder = nn.Sequential
     nn.Linear(input_size, latent size),
     nn.ReLU(True))
  # Decoder
  self.decoder = nn.Sequential
     nn.Linear(latent_size, input_size),
     nn.ReLU(True))
     def forward(self, x):
  x = self.encoder(x)
  x = self.decoder(x)
  return x
  # Initialize Autoencoder
  input_size = # Define based on task data
  latent_size = # Define based on desired complexity
  autoencoder = Autoencoder(input_size, latent size)
  # Training Process
  for epoch in range(num_epochs):
  for data in dataloader:
  # Forward pass
  output = autoencoder(data)
  loss = criterion(output, data) # Reconstruction loss
  # Backward pass and optimize
  optimizer.zero_grad()
  loss.backward()
  optimizer.step()
  # Evaluate and refine based on KL divergence reduction
  #...
```

3. Integrating KL Divergence insights: The autoencoder is fine-tuned to specifically address the areas of divergence identified in the KL analysis. This might involve adjusting the architecture or the loss function to better capture the required output patterns.

4. Strategy formulation: The autoencoder-based strategy is formulated with a focus on learning the inherent patterns in the data that align with the expected output distribution.

5. Iterative refinement: Post-training, the effectiveness of the autoencoder in reducing the KL divergence is evaluated. The model is iteratively refined based on this evaluation to achieve optimal alignment.

6. The implementation of an autoencoder-based fine-tuning strategy for GenAI models in tasks with limited labeled data represents a significant advancement in the field. This approach leverages the autoencoder's ability to learn intrinsic data patterns, aligning the model's output distribution with the expected outcomes. The integration of KL divergence analysis into this process ensures that the fine-tuning is highly targeted and effective, addressing specific areas of divergence. This method is an application of autoencoders in the context of GenAI, thus providing a systematic and adaptable solution for optimizing models in complex, data-scarce environments. The iterative refinement process, guided by continuous evaluation of the KL divergence, further enhances the precision and effectiveness of this strategy.

At step 212 of the method 200, the one or more hardware processors 104 are configured by the instructions to determining an effective optimization technique for each AI model in accordance with the subtask using a Q-learning model to optimize each AI model.

Optimization technique selection

1. Meta learning for optimization:

- Meta-learning, or learning to learn, is applied here. It involves using a 'learner of learners' approach with Q-learning (a form of reinforcement learning) to optimize the performance of various AI models.

- Q-Learning algorithm: Q-learning, a form of model-free reinforcement learning, is utilized to determine optimal actions (optimization strategies) in various states (model configurations and task scenarios).
- State-Action-Reward mechanism: States in the Q-learning context are defined by the GenAI model's configuration, influenced by KL divergence analysis and previous fine-tuning strategies. Actions are potential optimization strategies, and rewards are determined based on the improvement in alignment between the model's output and the expected results.

2. Application in GenAI optimization:

- Training the Q-Learner: The algorithm is trained across various tasks, learning from the outcomes of different optimization strategies informed by KL divergence results and fine-tuning strategies.
- Dynamic strategy selection: The Q-learning model uses its learned experiences to recommend the most effective optimization strategy for each unique task and model state.

**Pseudocode 3: for Q-Learning algorithm with KL Divergence and fine-tuning integration**:

```
import numpy as np

# Initialize Q-table
num_states = ... # Derived from model configurations, KL divergence, and fine-tuning results
num_actions = ...  # Defined by possible optimization strategies
q_table = np.zeros((num_states, num_actions))

# Hyperparameters
alpha = 0.1  # Learning rate
gamma = 0.9  # Discount factor
epsilon = 0.1  # Exploration rate

# Q-learning training loop
for episode in range(total_episodes):
    state = get_initial_state_based_on_kl_and_fine_tuning()

    while not done:
        # Exploration-exploitation trade-off
        if np.random.uniform(0, 1) < epsilon:
```

```
        action = np.random.choice(num_actions)  # Explore
    else:
        action = np.argmax(q_table[state])  # Exploit learned values


    next_state, reward, done =
perform_action_based_on_optimization_strategy(state, action)


    # Update rule incorporating KL divergence and fine-tuning feedback
    q_value = q_table[state, action]
    max_value = np.max(q_table[next_state])
    reward = calculate_reward_based_on_kl_and_fine_tuning(next_state)
    new_q_value = (1 - alpha) * q_value + alpha * (reward + gamma * max_value)
    q_table[state, action] = new_q_value


    state = next_state
    ```
```

Optimization strategy decision point:

Process:

- Evaluation of optimization algorithms: The system assesses algorithms like Adam, RMSprop, and SGD, considering their performance in specific GenAI model configurations and tasks.
- Integration with previous steps: Recommendations from the Q-learning model are based on its learning, which includes the effectiveness of past fine-tuning strategies and KL divergence outcomes.
- Selection based on meta-Learning: The optimization strategy is chosen based on the Q-learning model's recommendations, ensuring optimal performance improvement for the GenAI model.

3. The integration of Q-learning with KL divergence analysis and fine-tuning strategies in the system for GenAI model optimization allows for a nuanced, data-driven method to optimize GenAI models, tailored to the specific requirements and contexts of different tasks. The use of Q-learning to dynamically select the most effective optimization strategies based on historical performance and current task alignment ensures that the GenAI models are optimized for maximum efficiency and effectiveness. By incorporating the outcomes of KL divergence and fine-tuning steps into the learning process, the algorithm achieves a high level of contextual relevance and performance accuracy. This methodology is an advancement in the realm of GenAI, significantly enhancing the optimization process and applicability of GenAI models in complex enterprise scenarios

At step 214 of the method 200, the one or more hardware processors 104 are configured by the instructions to tune a set of hyperparameters of each AI model among the set of AI models. This involves using advanced algorithms to suggest the best settings for these parameters. The decision is based on an analysis of how different hyper-parameter settings impact the model's performance. Techniques like grid search, random search, or Bayesian optimization are commonly used in this process.

An Actor-Critic framework is integrated to refine Q-values, in real time, obtained from previous reinforcement learning steps of the Q-learning, wherein an actor proposes actions based on the current policy, while a critic evaluates the actions by estimating a value function, leading to more precise Q-value adjustments.

The AI model, with its fine-tuning strategies, optimization methods, and hyper-parameters, is deployed for the task. Technical aspect: This step involves setting up the model in a real-world environment and ensuring it integrates smoothly with existing systems and workflows.

Performance monitoring and data collection: The system continuously monitors the model's performance during task execution. This involves collecting data on various performance metrics, which can be used for further optimization and improvements.

**# Pseudocode 4: for Meta Learner Reinforcement with Actor-Critic:**

```
import numpy as np
import tensorflow as tf


class ActorCriticModel(tf.keras.Model):
    def __init__(self, state_size, action_size, q_table):
        super(ActorCriticModel, self).__init__()
        self.state_size = state_size
        self.action_size = action_size
        self.q_table = q_table  # Pre-learned Q-table


        # Actor Network
        self.actor_dense = tf.keras.layers.Dense(action_size, activation='softmax')


        # Critic Network
        self.critic_dense = tf.keras.layers.Dense(1)


    def call(self, state):
        actor_output = self.actor_dense(state)
        critic_output = self.critic_dense(state)
        return actor_output, critic_output


# Initialize Actor-Critic Model
state_size = ...  # Defined by the state representation
```

```
action_size = ...  # Defined by possible optimization actions
pre_learned_q_table = ...  # Q-table from previous Q-learning steps
actor_critic_model = ActorCriticModel(state_size, action_size, pre_learned_q_table)


# Training Loop
optimizer = tf.keras.optimizers.Adam(learning_rate=0.01)
for state, action, reward, next_state in training_data:
    with tf.GradientTape() as tape:
        # Get current policy actions and value estimate
        policy, value = actor_critic_model(tf.convert_to_tensor([state]))


        # Use Q-table for Critic's evaluation
        q_value = pre_learned_q_table[state, action]
        next_q_value = np.max(pre_learned_q_table[next_state])
        td_target = reward + next_q_value
        td_error = td_target - q_value


        # Calculate actor loss (policy gradient)
        actor_loss = -tf.math.log(policy[0, action]) * td_error


        # Calculate critic loss based on TD error
        critic_loss = td_error ** 2


        # Total loss
        total_loss = actor_loss + critic_loss


    gradients = tape.gradient(total_loss, actor_critic_model.trainable_variables)
    optimizer.apply_gradients(zip(gradients, actor_critic_model.trainable_variables))

        # Update the Q-table with the Critic's new evaluation
        pre_learned_q_table[state, action] = q_value + alpha * td_error
```

The Meta Learner Reinforcement of the system 100 employs an Actor-Critic (AAC) approach to optimize the Q-values learned in earlier steps, such as through Q-learning in model optimization processes. This advanced method is instrumental in refining and enhancing the decision-making capabilities of the system, particularly in optimizing Generative AI (GenAI) models for complex tasks.

Actor-Critic Reinforcement Learning:

- AAC Framework Integration: The Actor-Critic framework is integrated to refine the Q-values obtained from previous reinforcement learning steps. In this framework, the Actor proposes actions based on the current policy, while the Critic evaluates these actions by estimating the value function, leading to more precise Q-value adjustments.
- Feedback from prior steps: The AAC method utilizes feedback from earlier stages, such as outcomes from the KL divergence analysis and fine-tuning strategies, to inform the Critic's evaluations and the Actor's policy updates.
- Continuous Q-value Optimization: The Actor updates its policy for selecting optimization strategies based on the Critic's evaluations, which are informed by the effectiveness of actions in terms of Q-values. This results in a more refined and accurate approach to GenAI model optimization.

The implementation of the Actor-Critic architecture for optimizing Q-values in the system 100 is a sophisticated advancement in GenAI model optimization. This method allows for dynamic adaptation of strategies based on real-world performance feedback. The integration of a pre-learned Q-table with the Actor-Critic model enables the system to utilize prior learning while continuously refining its approach through the Critic's evaluations and the Actor's policy updates. The use of Temporal Difference (TD) error as a basis for the Critic's assessment and Actor's policy gradient calculations ensures that the model not only leverages historical data but also adapts to new scenarios, making the optimization process more effective and robust. This application of reinforcement learning principles in optimizing Q-values reflects a significant technological advancement, offering a nuanced, effective, and adaptive approach to GenAI model optimization.

This approach not only optimizes the GenAI model's performance for specific tasks but also ensures continual learning and adaptation, making it a robust and dynamic solution for complex AI applications.

Continuous Learning and Adaptation:

Ongoing Adaptation: The system 100 continually refines its analyses, model recommendations, and optimization strategies based on real-time learning and feedback. This step embodies the concept of continuous learning in AI, where the system evolves and improves over time, adapting to new data, changing conditions, and feedback. The system represents a significant leap in the field of enterprise AI, offering a flexible, and highly effective solution for automating complex, nuanced tasks, and democratizing SME knowledge within organizations. Its unique combination of automated agent chain generation, advanced model recommendation, and fine-tuning, along with an API-driven configurator, positions it as a ground-breaking tool in the realm of generative AI applications in enterprise settings.

Thus, the method and system herein provide:

1. Comprehensive Softwarized GenAI BizDevOps:

- The system provides a complete, hyperscalar agnostic GenAI business development and operational process. This encompasses use case design, pre-training, optimization, and guard railing, specifically tailored for GenAI applications. Unlike traditional approaches, this ensures consistent, high-quality GenAI outcomes with minimal variability, marking a significant advancement in GenAI process integration and automation.

2. Autonomous GenAI Model-Domain Alignment:

- The system autonomously aligns GenAI models with specific industry domains, reducing reliance on human expertise. This system enhances the efficiency and accuracy of model alignment, offering a solution to a persistent challenge in domain-specific GenAI applications.

3. Pre-Integrated LLM Processes and Agent Ecosystems:

- The system 100 uniquely automates the lifecycle of Large Language Models (LLMs), interchangeably referred to as AI/GenAI models, central to GenAI, and integrates them with a ready-made ecosystem of AI agents or AI models. This integrated approach simplifies the deployment and maintenance of LLMs and agent interactions, representing a significant improvement in GenAI operational efficiency.

4. AI-Driven feedback management for GenAI:

- The system's AI-driven feedback system tailored for GenAI models accelerates the feedback loop, enhancing model responsiveness and adaptability. This system is a substantial improvement over slower, human-led feedback mechanisms in traditional GenAI models.

5. Unified GenAI development and operations platform:

- By unifying diverse GenAI development activities into a single platform, The system's streamlines the entire GenAI development lifecycle. This unified approach is a marked improvement over fragmented systems, significantly reducing complexity and operational overhead in GenAI projects.

6. Democratized GenAI development with low-code/no-code Solutions:

- The system introduces low-code and no-code solutions, making complex GenAI model development and operations accessible to a broader range of users. This democratization is a notable advancement, reducing the technical barrier for GenAI application development.

7. Enhanced task suitability assessment with Decoder-only models (LRI-DecNN):

- The system's use of advanced decoder-only models for task suitability assessment in GenAI represents a significant technological leap. This method provides a nuanced understanding of tasks, exceeding the capabilities of traditional NLP methods in GenAI.

8. Blackbox performance estimation for GenAI models:

- Employs a Blackbox estimation method for assessing the performance of GenAI models, balancing detailed analysis with computational efficiency. This technique is a considerable advancement in model performance analysis for GenAI applications.

9. KL Divergence-based fine-tuning Strategy for GenAI:

- The system's use of KL divergence analysis for developing fine-tuning strategies in GenAI enhances model alignment with desired outcomes. This approach marks a significant improvement in the precision of model tuning in GenAI.

10. Meta-Learning and Q-Learning for GenAI optimization:

- Applying meta-learning and Q-learning techniques for optimization in GenAI, system introduces a cutting-edge approach. This technique allows the system to effectively learn and adapt, optimizing various GenAI models, a significant advancement over traditional optimization methods.

11. Meta-mixture of experts technique for GenAI agent chain:

- The introduction of the meta-mixture of experts technique for creating optimized agent chain in GenAI represents a pioneering approach in task-specific optimization, enhancing the robustness and adaptability of GenAI task execution.

12. Continuous Learning and Adaptive Reinforcement in GenAI:

- The system's continuous learning and adaptive reinforcement mechanism, tailored for GenAI, ensures ongoing evolution and improvement. This feature keeps the system responsive to new data and changing conditions, representing a substantial advancement in AI adaptability and learning.

Each of these advancements in the system 100 disclosed herein represents a significant progression in the field of enterprise GenAI automation. They not only enhance the efficiency and effectiveness of GenAI applications in complex tasks but also expand the realm of possibilities for automation in areas previously considered beyond the reach of existing GenAI technologies.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent

**EP 4 575 894 A1**

elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method comprising:

analyzing (202), by using a Logic and Rule Integrated-Decoder Neural Network (LRI-DecNN) executed by one or more hardware processors, a task received in natural language to obtain a contextual output for the task comprising a complexity (C), a clarity of objectives (O) and an augmentation potential (A) of the task, wherein a self-attention mechanism of the LRI-DecNN is modified to integrate a logic and rule factor (B) enabling the LRI-DecNN to pay attention to a set of predefined logic and rules;
assessing (204), by the LRI-DecNN executed by the one or more hardware processors, suitability of the task for Artificial Intelligence (AI) augmentation based on value of a score function (S) derived from the complexity (C), the clarity of objectives (O) and the augmentation potential (A);
translating (206), by the one or more hardware processors, the task into an agent chain comprising a set of chained subtasks using a meta-mixture of experts technique, wherein the meta-mixture of experts technique utilizes a routing function (R) that evaluates requirements of the task and matches the requirements with the strengths and specializations of each expert model amongst the set of expert models of the meta-mixture of

21

experts technique;

determining (208), by the one or more hardware processors, an AI model among a set of AI models for each subtask among the set of chained subtasks based on a statistical function for Blackbox estimation in AI augmentation;

fine-tuning (210), by the one or more hardware processors, each AI model identified for each subtask among the set of chained subtasks using a Kullback-Leibler (KL) divergence to align output distribution of each AI model with an expected distribution of the task, wherein fine-tuning involves adjusting training data, modifying the AI model architecture, or tweaking the learning process of the AI model to minimize the KL divergence;

determining (212), by the one or more hardware processors, an effective optimization technique for each AI model in accordance with the subtask using a Q-learning model to optimize each AI model; and

tuning (214), by the one or more hardware processors, a set of hyperparameters of each AI model among the set of AI models.

2. The processor implemented method as claimed in claim 1, wherein an Actor-Critic framework is integrated to refine Q-values, in real time, obtained from previous reinforcement learning steps of the Q-learning, and wherein an actor proposes actions based on a current policy, while a critic evaluates the actions by estimating a value function, leading to more precise Q-value adjustments.

3. The processor implemented method of claim 1, wherein during inferencing, the hyperparameter tuned set of AI models identified for each subtask combinedly perform the task for an enterprise, and wherein the task is a Nuanced Enterprise Task.

4. The processor implemented method of claim 1, wherein the self-attention mechanism integrating the logic and rule factor (B) is mathematically represented as: $A_\theta = softmax(\theta * (QK^T + B) / sqrt(d_k)) * V$, wherein (Q) represents standard queries, (K) represents standard keys, and (V) represents standard values used in the self-attention mechanism, and wherein (B) represents an encoded logic and rules integrated into calculation of attention by the self-attention mechanism, influencing weighing of different parts of the input by the LRI-DecNN.

5. The processor implemented method of claim 1, wherein the routing function (R) is mathematically represented as ($R$ ($T, E_i$, where $i$ = 1 to n)), wherein (T) is the task, and (E) is the set of expert models (n) comprising decoder only Large Language Models (LLMs) available as experts..

6. The processor implemented method of claim 1, wherein the statistical function is represented as,

$$F(TC, HMP, DA, MA, TMA$$
$$= w\_1 * TC + w\_2 * HMP + w\_3 * DA + w\_4 * MA$$
$$+ w\_5 * TMA$$

wherein, Task Complexity (TC) is a measure of difficulty of the task, Historical Model Performance (HMP) indicates past task performance of GenAI models for similar tasks, Data Availability (DA) providing extent and quality of data available for the task, Model Adaptability (MA) is a measure of how adaptable the GenAI model is to different types of tasks, Task-Model Alignment (TMA) is a score representing how well the task aligns with the GenAI model's strengths and capabilities, and

wherein 'w_1', 'w_2', 'w_3', 'w_4', *and* 'w_5' are the weights assigned to each parameter *(TC, HMP, DA, MA, TMA)* and learned using a RNN based algorithm; and

wherein a high score for F indicates suitability of the GenAI model for the natural language task.

7. A system (100) comprising:

a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:

analyze, by using a Logic and Rule Integrated-Decoder Neural Network (LRI-DecNN), a task received in natural language to obtain a contextual output for the task comprising a complexity (C), a clarity of objectives (O) and an augmentation potential (A) of the task, wherein a self-attention mechanism of the LRI-DecNN is modified to integrate a logic and rule factor (B) enabling the LRI-DecNN to pay attention to a set of predefined logic and rules;

assess by the LRI-DecNN executed, suitability of the task for Artificial Intelligence (AI) augmentation based on value of a score function (S) derived from the complexity (C), the clarity of objectives (O) and the augmentation potential (A);

translate the task into an agent chain comprising a set of chained subtasks using a meta-mixture of experts technique, wherein the meta-mixture of experts technique utilizes a routing function (R) that evaluates requirements of the task and matches the requirements with the strengths and specializations of each expert model amongst the set of expert models of the meta-mixture of experts technique;

determine an AI model among a set of AI models for each subtask among the set of chained subtasks based on a statistical function for Blackbox estimation in AI augmentation;

fine-tune each AI model identified for each subtask among the set of chained subtasks using a Kullback-Leibler (KL) divergence to align output distribution of each AI model with an expected distribution of the task, wherein fine-tuning involves adjusting training data, modifying the AI model architecture, or tweaking the learning process of the AI model to minimize the KL divergence;

determine an effective optimization technique for each AI model in accordance with the subtask using a Q-learning model to optimize each AI model; and

tune a set of hyperparameters of each AI model among the set of AI models.

8. The system of claim 7, wherein an Actor-Critic framework is integrated to refine Q-values, in real time, obtained from previous reinforcement learning steps of the Q-learning, and wherein an actor proposes actions based on a current policy, while a critic evaluates the actions by estimating a value function, leading to more precise Q-value adjustments.

9. The system of claim 7, wherein during inferencing, the hyperparameter tuned set of AI models identified for each subtask combinedly perform the task for an enterprise, and wherein the task is a nuanced task.

10. The system of claim 7, wherein the self-attention mechanism integrating the logic and rule factor (B) is mathematically represented as: $A_\theta = softmax(\theta * (QK^T + B) / sqrt(d_k)) * V$, wherein (Q) represents standard queries, (K) represents standard keys, and (V) represents standard values used in the self-attention mechanism, and wherein (B) represents an encoded logic and rules integrated into calculation of attention by the self-attention mechanism, influencing weighing of different parts of the input by the LRI-DecNN.

11. The system of claim 7, wherein the routing function (R) is mathematically represented as $(R(T, E_i, where i = 1\ to\ n))$, wherein (T) is the task, and (E) is the set of expert models (n) comprising decoder only Large Language Models (LLMs) available as experts..

12. The system of claim 7, wherein the statistical function is represented as,

$$F(TC, HMP, DA, MA, TMA$$
$$= w\_1 * TC + w\_2 * HMP + w\_3 * DA + w\_4 * MA$$
$$+ w\_5 * TMA$$

wherein, Task Complexity (TC) is a measure of difficulty of the task, Historical Model Performance (HMP) indicates past task performance of GenAI models for similar tasks, Data Availability (DA) providing extent and quality of data available for the task, Model Adaptability (MA) is a measure of how adaptable the GenAI model is to different types of tasks, Task-Model Alignment (TMA) is a score representing how well the task aligns with the GenAI model's strengths and capabilities, and

wherein 'w_1', 'w_2', 'w_3', 'w_4', and 'w_5' are the weights assigned to each parameter (TC, HMP, DA, MA, TMA) and learned using a RNN based algorithm; and

wherein a high score for F indicates suitability of the GenAI model for the natural language task.

13. One or more non-transitory machine-readable information storage mediums comprising one or more instructions which when executed by one or more hardware processors cause:

analyzing, by using a Logic and Rule Integrated-Decoder Neural Network (LRI-DecNN) executed by one or more hardware processors, a task received in natural language to obtain a contextual output for the task comprising a complexity (C), a clarity of objectives (O) and an augmentation potential (A) of the task, wherein a self-attention mechanism of the LRI-DecNN is modified to integrate a logic and rule factor (B) enabling the LRI-DecNN to pay attention to a set of predefined logic and rules;

assessing, by the LRI-DecNN, suitability of the task for Artificial Intelligence (AI) augmentation based on value of a score function (S) derived from the complexity (C), the clarity of objectives (O) and the augmentation potential (A);

translating, the task into an agent chain comprising a set of chained subtasks using a meta-mixture of experts technique, wherein the meta-mixture of experts technique utilizes a routing function (R) that evaluates requirements of the task and matches the requirements with the strengths and specializations of each expert model amongst the set of expert models of the meta-mixture of experts technique;

determining, by an AI model among a set of AI models for each subtask among the set of chained subtasks based on a statistical function for Blackbox estimation in AI augmentation;

fine-tuning, by each AI model identified for each subtask among the set of chained subtasks using a Kullback-Leibler (KL) divergence to align output distribution of each AI model with an expected distribution of the task, wherein fine-tuning involves adjusting training data, modifying the AI model architecture, or tweaking the learning process of the AI model to minimize the KL divergence;

determining by an effective optimization technique for each AI model in accordance with the subtask using a Q-learning model to optimize each AI model; and

tuning, by a set of hyperparameters of each AI model among the set of AI models.

**14.** The one or more non-transitory machine-readable information storage mediums of claim 13,

wherein an Actor-Critic framework is integrated to refine Q-values, in real time, obtained from previous reinforcement learning steps of the Q-learning, and wherein an actor proposes actions based on a current policy, while a critic evaluates the actions by estimating a value function, leading to more precise Q-value adjustments;

wherein during inferencing, the hyperparameter tuned set of AI models identified for each subtask combinedly perform the task for an enterprise, and wherein the task is a Nuanced Enterprise Task; and

wherein the self-attention mechanism integrating the logic and rule factor (B) is mathematically represented as: $A_\theta = softmax(\theta * (QK^T + B) / sqrt(d_k)) * V$, wherein (Q) represents standard queries, (K) represents standard keys, and (V) represents standard values used in the self-attention mechanism, and wherein (B) represents an encoded logic and rules integrated into calculation of attention by the self-attention mechanism, influencing weighing of different parts of the input by the LRI-DecNN;

**15.** The one or more non-transitory machine-readable information storage mediums of claim 13,

wherein the routing function (R) is mathematically represented as ($R(T, E_i, where i = 1$ to $n$)), wherein (T) is the task, and (E) is the set of expert models (n) comprising decoder only Large Language Models (LLMs) available as experts;

wherein the statistical function is represented as,

$$F(TC, HMP, DA, MA, TMA$$
$$= w\_1 * TC + w\_2 * HMP + w\_3 * DA + w\_4 * MA$$
$$+ w\_5 * TMA$$

wherein, Task Complexity (TC) is a measure of difficulty of the task, Historical Model Performance (HMP) indicates past task performance of GenAI models for similar tasks, Data Availability (DA) providing extent and quality of data available for the task, Model Adaptability (MA) is a measure of how adaptable the GenAI model is to different types of tasks, Task-Model Alignment (TMA) is a score representing how well the task aligns with the GenAI model's strengths and capabilities, and

wherein 'w_1', 'w_2', 'w_3', 'w_4', *and* 'w_5' are the weights assigned to each parameter (*TC, HMP, DA, AM, TMA*) and learned using a RNN based algorithm; and

wherein a high score for F indicates suitability of the GenAI model for the natural language task.

System**100**

Processor(s) **104**      I/O Interface(s) **106**

Memory **102**

Database **108**

Modules **110**

**FIG. 1A**

System 100

| Nuanced task for AI Augmentation | **LRI -DecNN** <br><br> Task analysis | Contextual output for the task comprising complexity (C), clarity of objectives (O) and an augmentation potential (A) of the task | **Score function module S=f(COA)** <br><br> S-value for the task > predefined value (high) | suitable for AI augment ation | **Meta-mixture of experts module** <br><br> Generate agent chain (subtasks) | **Blackbox estimation module (statistical function)** <br><br> Identify Best AI model among a set of AI models for each subtask | Identified AI models |

Logic and rules of an enterprise - (B)

| **Hyper parameter tuned set of AI models identified for each subtask** <br> Execute Nuanced task | • **Fine tune** (KL divergence) <br> • **Optimize** (Q-learning, Actor-Critic framework) <br> • **Hyperparameter tuning** |

**FIG. 1B**

200

analyzing, by LRI-DecNN, a task received in natural language to obtain a contextual output for the task comprising a complexity (C), a clarity of objectives (O) and an augmentation potential (A) of the task, wherein a self-attention mechanism of the LRI-DecNN is modified to integrate a logic and rule factor (B) enabling the LRI-DecNN to pay attention to a set of predefined logic and rules

202

assessing suitability of the task for Artificial Intelligence (AI) augmentation based on value of a score function (S) derived from the complexity (C), the clarity of objectives (O) and the augmentation potential (A);

204

translating the task into an agent chain comprising set of chained subtasks using a meta-mixture of experts technique, that utilizes function (R) to evaluate requirements of the task and matches the requirements with the strengths and specializations of each expert model AI model among the set of expert models of the Meta mixture of expert technique

206

A

**FIG. 2A**

200

A

determining an AI model among a set of AI models for each subtask among the set of chained subtasks based on a statistical function for Blackbox estimation in AI augmentation — 208

fine tuning each AI model identified for each subtask among the set of chained subtasks using a KL divergence to align output distribution of each AI model with an expected distribution of the task, wherein fine tuning involves adjusting training data, modifying the AI model architecture, or tweaking the learning process of the AI model to minimize the KL divergence — 210

determining an effective optimization technique for each AI model in accordance with the subtask using a Q-learning model to optimize each AI model — 212

tuning a set of hyper parameters of each AI model among the set of AI models — 214

**FIG. 2B**

**FIG. 3**

Output

Softmax

Linear

Layers {L1... .Ln}

Add norm

Feedforward

Add and Layer normalization

Multi-headed Attention

Positional Encoding

Input Embeddings

Logic and rules (B)

Add and Layer normalization

Masked Multi-headed Attention

Input Embeddings

Input (Q,K,V)

Positional Encoding

Europäisches
Patentamt

European
Patent Office

Office européen
des brevets

# EUROPEAN SEARCH REPORT

**Application Number**

EP 24 21 8098

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/316043 A1 (DARVISH ROUHANI BITA [US] ET AL) 5 October 2023 (2023-10-05) * paragraphs [0002] - [0092] * | 1-15 | INV. G06N3/045 |
| A | BOAN LIU ET AL: "Diversifying the Mixture-of-Experts Representation for Language Models with Orthogonal Optimizer", ARXIV.ORG, CORNELL UNIVERSITY LIBRARY, 201 OLIN LIBRARY CORNELL UNIVERSITY ITHACA, NY 14853, 15 October 2023 (2023-10-15), XP091636196, * pages 1-9 * | 1-15 | |

TECHNICAL FIELDS
SEARCHED      (IPC)

G06N

The present search report has been drawn up for all claims

| Place of search | Date of completion of the search | Examiner |
|---|---|---|
| The Hague | 2 April 2025 | Moran, Matthew |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 8098

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2025

| Patent document cited in search report | Publication date | Patent family member(s) | | Publication date |
|---|---|---|---|---|
| US 2023316043 A1 | 05-10-2023 | CN | 118829989 A | 22-10-2024 |
| | | EP | 4500392 A1 | 05-02-2025 |
| | | TW | 202341015 A | 16-10-2023 |
| | | US | 2023316043 A1 | 05-10-2023 |
| | | WO | 2023191925 A1 | 05-10-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321087106